# EUROPEAN PATENT APPLICATION

(11) **EP 1 645 591 A1**
(43) Date of publication of application: **12.04.2006**
(21) Application number: 05256198.2
(22) Date of filing: 04.10.2005
(51) Int. Cl.: C08K 3/26, C08K 5/098, C08K 5/37, C08K 5/372

(54) **Thermal stabilizer composition for halogen-containing vinyl polymers**

(30) Priority: 08.10.2004 US 617010 P
(71) Applicant: Rohm and Haas Company, Philadelphia, PA 19106-2399 (US)
(72) Inventor: Norris, Gene K., West Chester Pennsylvania 45069 (US)
(74) Representative: Kent, Venetia Katherine

(57) **Abstract**

Stabilizer compositions are used to stabilize halogen-containing vinyl polymers from, for example, degradation and discoloration. The stabilizer compositions comprise a hydrotalcite; and a zinc mercaptide, a mixture of a mercaptan containing organic compound and a zinc carboxylate, or a combination comprising one or more of the foregoing stabilizers.

## Description

### BACKGROUND

This invention relates to stabilizer compositions for halogen-containing vinyl polymers, the stabilized halogen-containing vinyl polymer compositions, and articles formed therefrom, and methods for stabilizing halogen-containing vinyl polymers.

Halogen-containing vinyl polymers, for example, poly(vinyl chloride) (PVC), copolymers of vinyl chloride and vinyl acetate, and poly(vinylidine chloride), are commonly used for fabricating a variety of articles such as pipes, window casings, siding, bottles, wall covering, and packaging film. There have been many attempts to add stabilizers to halogen-containing vinyl polymers to ameliorate the color changes that can occur in the polymer resins, particularly those color changes that occur during the first one to ten minutes of processing and/or those that occur over prolonged use. Zinc salts are useful stabilizers that can significantly reduce the color changes observed in halogen-containing vinyl polymers in, for example, the early stages of processing. Other compounds such as mercaptan-containing organic compounds have been added as co-stabilizers with zinc compounds to improve stabilization at the later stages of processing as in, for example, U.S. Patent No. 3,067,166. Blocked mercaptans have been combined with a fatty acid salt of zinc as disclosed in U.S. Patent No. 4,973,619. While these combinations are suitable for their intended purpose, there remains a need for other stabilizer combinations for halogen-containing vinyl polymers.

The problem addressed by the invention is therefore the provision of stabilizer compositions for halogen-containing vinyl polymers, particularly stabilizer compositions that are effective in protecting halogen-containing vinyl polymers from degradation and discoloration during processing or long-term use.

### STATEMENT OF THE INVENTION

In a first aspect, there is provided a stabilized polymeric composition comprising a halogen-containing vinyl polymer, and a stabilizer composition, the stabilizer composition comprising
a hydrotalcite, and
a zinc mercaptide; a mixture of a mercaptan-containing organic compound and a zinc carboxylate; or a mixture comprising one or more of the foregoing stabilizers, wherein
the zinc mercaptide is a zinc mercaptoester of Formula 2:

   Zn[S(CH₂)_{b}C(=O)OR]₂ (2)

   wherein each R is independently a hydrocarbyl group, and b is 1 or 2; a zinc mercaptoester of Formula 3:

   Zn[S(CHR')_{c}(CH₂)_{d}C(=O)OR"]₂ (3)

   wherein c = 0 or 1, d = 1 or 2, each R' is independently methyl or -C(=O)OR", and each R" is independently -[(CH₂{C(R*)(R²*)}ₑCH₂O)_{f}R³*] where each R* is independently -H, C₁₋₁₈ alkyl or C₁₋₁₈ hydroxy-substituted alkyl, each R²* is -OH, C₁₋₁₈ hydroxy-substituted alkyl, or -OC(=O)R⁴*, each R³* is -H or C₁₋₁₈ alkyl, each R⁴* is alkyl or alkenyl, e = 0 or 1, and f = 1-4, with the proviso that when f is greater than 1, e=0; or a zinc mercaptoalkyl carboxylic acid ester of Formula 4:

   Zn[SCH₂(CH₂)_{g}OC(=O)R⁵*]₂, (4)

   wherein R⁵* is a C₁₋₁₈ alkyl, C₁₋₁₈ alkenyl, or C₆₋₁₂ aryl group, and g = 1-6, or a mixture comprising one or more of the foregoing zinc mercaptides.

In a second aspect, there is provided a stabilizer composition comprising a hydrotalcite; and a zinc mercaptide, a mixture of a mercaptan-containing organic compound and a zinc carboxylate, or a mixture comprising one or more of the foregoing stabilizers.

In a third aspect, there is provided a method of stabilizing a halogen-containing vinyl polymer comprising adding the above-described stabilizer composition to the polymer.

In a fourth aspect, there is provided an article comprising the above-described stabilized polymeric composition.

The disclosed stabilizer compositions surprisingly show improved stabilization compared to similar compositions without a hydrotalcite. The stabilizer compositions offer suitable short-term as well as long-term color stability.

### DETAILED DESCRIPTION

The terms "a" and "an" herein do not denote a limitation of quantity, but rather denote the presence of at least one of the referenced item.

As used herein, a hydrocarbyl group is a group that is inclusive of saturated or unsaturated hydrocarbons, i.e., alkyl, cycloalkyl, alkenyl, cycloalkenyl, aryl, aralkyl, aralkaryl, aracycloalkyl, aralkenyl, alkaryl, cycloalkaryl, and alkenylaryl groups, as well as mixtures of the foregoing groups. The term is specifically contemplated to include mixtures of hydrocarbons derived from natural sources, for example tall oil, and the like. Further, alkyl groups and the alkyl portion of the foregoing groups may be linear or branched unless otherwise indicated. The term oxyalkylenyl means a divalent group of a polyalkylene ether molecule. The prefix "halo" indicates the presence of one more fluorine, chlorine, bromine, and/or iodine groups. Also as used herein, an acyloxyalkyl group originates from a carboxylic acid ester of an alcohol, thus has the formula -ROC(=O)R (e.g., the stearic acid ester of mercaptopropanol has a stearoyloxypropyl group); while an alkoxycarbonylalkyl group has the formula -RC(=O)OR (e.g., lauryl 3-mercaptopropionate has a dodecyloxycarbonylethyl group). The abbreviation "phr" refers to parts by weight of a particular component per 100 parts by weight of the halogen-containing vinyl polymer.

As used herein, "alkyl" is intended to include both branched and straight-chain saturated aliphatic hydrocarbon groups, having the specified number of carbon atoms. Thus, the term C₁₋₆ alkyl as used herein includes alkyl groups having from 1 to 6 carbon atoms. When C₀₋ₙ alkyl is used herein in conjunction with another group, for example, (phenyl)C₀₋₄ alkyl, the indicated group, in this case phenyl, is either directly bound by a single covalent bond (Co), or attached by an alkyl chain having the specified number of carbon atoms, in this case from 1 to about 4 carbon atoms. Examples of alkyl include, but are not limited to, methyl, ethyl, n-propyl, isopropyl, n-butyl, t-butyl, n-pentyl, and sec-pentyl.

"Alkenyl" as used herein, indicates a hydrocarbon chain of either a straight or branched configuration having one or more carbon- carbon double bond bonds, which may occur at any stable point along the chain. Examples of alkenyl groups include ethenyl and propenyl.

"Alkoxy" represents an alkyl group as defined above with the indicated number of carbon atoms attached through an oxygen bridge. Examples of alkoxy include, but are not limited to, methoxy, ethoxy, n- propoxy, i- propoxy, n-butoxy,2-butoxy, t-butoxy, n-pentoxy, 2-pentoxy, 3- pentoxy, isopentoxy, neopentoxy, n-hexoxy, 2-hexoxy, 3-hexoxy, and 3- methylpentoxy.

As used herein, the term "aryl" indicates aromatic groups containing only carbon in the aromatic ring or rings. Typical aryl groups contain 1 to 3 separate, fused, or pendant rings and 6 to 18 ring atoms, without heteroatoms as ring members. When indicated, such aryl groups may be further substituted with carbon or non-carbon atoms or groups. Such substitution may include fusion to a 5 to 7-membered saturated cyclic group that optionally contains 1 or 2 heteroatoms independently chosen from N, O, and S, to form, for example, a 3,4-methylenedioxyphenyl group. Aryl groups include, for example, phenyl, naphthyl, including 1-naphthyl and 2-naphthyl, and bi-phenyl.

The term ester alkyl indicates an alkyl group as define above attached through an ester linkage, i.e. a group of the formula -O(C=O)alkyl.

"Alkoxy carbonyl" refers to an alkoxy group adjacent a carbonyl group, i.e., a group of the formula alkyl -O(C=O)-.

A stabilizer for halogen-containing vinyl polymers comprises a hydrotalcite; and a zinc-mercaptide, a mixture of a zinc carboxylate and a mercaptoester, or a mixture comprising one or more of the foregoing stabilizers.

The stabilizer composition comprises a hydrotalcite. Suitable hydrotalcites have the general formula 1:

Mg₁₋ₛAlₛ (OH)₂ A_{s/2}·tH₂O (1)

wherein s is 0 to 0.5, A is CO₃- or SO₄- and, t is the number of H₂Os in the molecule. The hydrotalcites which can be used include various naturally occurring mineral hydrotalcites and synthetic hydrotalcites as described in the above formula. Such hydrotalcites may be used in the form of their higher fatty acid alkali metal salts or organic sulfonic acid alkali metal salts. Suitable hydrotalcites include those wherein s is 0.1 to 0.4, A is CO₃-, and t is 0.4 to 0.7, for example, s is 0.33, A is CO₃- and t is 0.5. One suitable hydrotalcite is commercially available as Alcamizer® 4 from Kyowa Chemical.

In general, a suitable amount of hydrotalcite is 0.05 phr to 5 phr, or 0.1 phr to 2.5 phr.

A number of suitable zinc mercaptides for use in the inventive stabilizer compositions are known, and include, for example, zinc mercaptoesters and zinc mercaptoalkyl carboxylic acid esters. An exemplary zinc mercaptoester is of Formula 2:

Zn[S(CH₂)_{b}C(=O)OR]₂ (2)

wherein each R is independently a hydrocarbyl group, and b is 1 or 2. Suitable zinc mercaptoesters of Formula 2 include, for example, zinc bis(2-ethylhexyl thioglycolate), zinc bis(octyl mercaptopropionate), zinc bis(octadecyl thioglycolate), zinc bis(octadecyl mercaptopropionate), zinc bis(ethyl thioglycolate), and mixtures comprising one or more of the foregoing zinc mercaptoesters.

Another suitable zinc mercaptoester is of Formula 3:

Zn[S(CHR')_{c}(CH₂)_{d}{C(=O)O}R"]₂ (3)

wherein c = 0 or 1, d = 1 or 2, each R' is independently methyl or -C(=O)OR", and each R" is independently -[(CH₂{C(R*)(R²*)}ₑCH₂O)_{f}R³*] where each R* is independently -H, C₁₋₁₈ alkyl or C₁₋₁₈ hydroxy-substituted alkyl, each R²* is -OH, C₁₋₁₈ hydroxy-substituted alkyl, or -OC(=O)R⁴*, each R³* is -H, C₁₋₁₈ alkyl, -C(O)R⁴*, each R⁴* is a hydrocarbyl group, preferably a C₁₋₃₆ alkyl or alkenyl group, e = 0 or 1, and f = 1-4, with the proviso that when f is greater than 1, e=0.

Suitable zinc mercaptoesters of Formula 3 include, for example, zinc bis(thioglycolate), zinc bis(mercaptopropionate), or a zinc mercaptosuccinate of a polyhydric alcohol or an ether, carboxylate, or ether-carboxylate having at least one hydroxy-functional group as exemplified by ethylene glycol, glycerol, tetraethylene glycol, trimethylolethane, pentaerythritol, glycol ethers such as tetraethylene glycol monobutyl ether, and diethylene glycol monoethyl ether, glycol monocarboxylates such as diethylene glycol monocaprate and ethylene glycol monocaprate, glycerol carboxylates such as glycerol monocaprate, and mixtures comprising one or more of the foregoing zinc mercaptoesters.

Another suitable zinc mercaptoalkyl carboxylic ester is of Formula 4:

Zn[SCH₂(CH₂)_{g}OC(=O)R⁵*]₂ (4)

wherein R⁵* is a C₁₋₁₈ alkyl, C₁₋₁₈ alkenyl, or C₆₋₁₂ aryl group, and g = 1-6. Mixtures comprising one or more of the foregoing zinc mercaptides of Formula 2 and/or Formula 3 and/or Formula 4 may also be used. Preferably, g = 1 or 2 and R⁵* is a C₇₋₁₇ alkyl group or a phenyl group.

The zinc mercaptoalkyl carboxylic esters of Formula 4 are "reverse esters", so called because they are the products of the reaction of mercaptoalkyl alcohols and carboxylic acids, instead of mercaptoacids and alcohols. Suitable reverse zinc esters include, for example, zinc bis(2-mercaptoethyl stearate), zinc (2-mercaptoethyl caproate), zinc bis(2-mercaptoethyl tallate), zinc bis(2-mercaptocaprylate), and mixtures comprising one or more of the foregoing reverses esters.

The zinc mercaptides of Formulas 2, 3 and 4 may be prepared by reaction of the corresponding mercaptoester or mercaptoalkyl carboxylic ester with zinc chloride in the presence of a suitable hydrogen chloride scavenger such as, for example, ammonia, ammonium hydroxide, or an alkali metal hydroxide or a carbonate thereof. Alternatively, condensation of the corresponding mercaptoester or mercaptoalkyl carboxylic ester with zinc oxide may be carried out at 100 to 140°C under reduced pressure to remove water, or in an organic medium such as, for example, high boiling point naphtha, xylene, and paraffin wax. The ratio of zinc compound and mercapto compound is that sufficient to drive the reaction, preferably a stoichiometric ratio. Atmospheric pressure is often suitable, but the reaction will proceed satisfactorily at 50 to 80°C at reduced pressure. The maximum reaction temperature is typically 140 to 150°C.

Some of mercaptoesters and/or mercaptoalkyl carboxylic esters are commercially available or may be made by procedures wherein the mercaptoacid and a hydroxyl-group bearing compound are heated in the presence of a suitable catalyst such as methanesulfonic acid or p-toluene sulfonic acid and an azeotropic organic solvent such as toluene or heptane. Alternatively, the esterification reaction may be conducted without solvent at reduced pressure. The reaction is continued until the acid number is reduced to 15 or less.

Suitable zinc mercaptides include, for example, zinc bis(2-ethylhexyl thioglycolate), zinc bis(octyl mercaptopropionate), zinc bis(octadecyl thioglycolate), zinc bis(octadecyl mercaptopropionate), zinc bis(ethyl thioglycolate), zinc bis(2-mercaptoethyl stearate), zinc (2-mercaptoethyl caproate), zinc bis(2-mercaptoethyl tallate), zinc bis(2-mercaptocaprylate), or a mixture comprising one or more of the foregoing zinc mercaptides. In one embodiment the zinc mercaptide comprises a forward mercaptoester such as, for example, zinc bis(2-ethylhexyl thioglycolate), zinc bis(octyl mercaptopropionate), zinc bis(octadecyl thioglycolate), zinc bis(octadecyl mercaptopropionate), zinc bis(ethyl thioglycolate), or a mixture comprising one or more of the foregoing zinc mercaptides.

The stabilizer composition may comprise a zinc carboxylate. Suitable zinc carboxylates are the zinc salts of substituted or unsubstituted carboxylic acids having two to 30 carbon atoms. The zinc carboxylate may be a zinc salt represented by formula 5:

Zn[{OC(=O)}₁R^{k}]₂₋₁ (5)

wherein 1 is zero or one, and each R^{k} is the same or different and is a saturated or unsaturated, straight or branched chain alkyl group having 1 to 30 carbon atoms, preferably 1 to 17 carbon atoms. Suitable carboxylic acids for formation of the zinc salt include, for example, monocarboxylic acids such as acetic acid, butyric acid, octanoic acid, neodecanoic acid, 2-ethylhexanoic acid, undecanoic acid, palmitic acid, lauric acid, stearic acid, 9,10-dihydroxystearic acid, oleic acid, 3,6,9-trioxadecanoic acid, benzoic acid, p-tert-butylbenzoic acid, dimethylhydroxybenzoic acid, or glycolic acid; and divalent carboxylic acids and their monoesters, such as oxalic acid, malonic acid, succinic acid, glutaric acid, adipic acid, fumaric acid, octane-1,8-dicarboxylic acid, 3,6,9-trioxadecane-1,10-dicarboxylic acid, lactic acid, maleic acid, tartaric acid, polyglycoldicarboxylic acid (n=10-12), phthalic acid, terephthalic acid, and hydroxyphthalic acid; and the di- or triesters of tri- or tetravalent carboxylic acids, such as hemimellitic acid, trimellitic acid, pyromellitic acid, citric acid, and mixtures comprising any one or more of the foregoing acids.

The zinc enolates may comprise enolates of acetylacetone, benzoylacetone, dibenzoylmethane, acetoacetic acid esters, benzoylacetic esters, or of dehydroacetic acid, and mixtures comprising any one or more of the foregoing enolates. A suitable zinc carboxylate is zinc octoate.

The amount of zinc provided by the zinc carboxylate, the zinc mercaptide, or mixture thereof is greater than 0.01 phr. The particular amount of zinc will vary depending on the application, and is readily determined by one of ordinary skill in the art, depending on the halogen-containing vinyl polymer formulation, processing method, intended use, and like considerations. In general, a suitable amount of zinc provided by the zinc carboxylate, the zinc mercaptide, or mixture thereof is 0.01 phr to 0.2 phr, or 0.015 phr to 0.1 phr.

The stabilizer composition may comprise a mercaptan-containing organic compound such as, for example, a mercaptoester or a reverse mercaptoester. As used herein, a mercaptoester comprises at least one alkoxycarbonylalkyl group bonded to a sulfhydryl group, i.e., a moiety having the formula HS-X-C(=O)O-wherein X is a substituted or unsubstituted hydrocarbyl group having a valency of at least two. A reverse mercaptoester has at least one acyloxyalkyl group bonded to a sulfhydryl group, i.e., a moiety having the formula HS-X-OC(=O)- wherein X is a substituted or unsubstituted hydrocarbyl group having a valency of at least two. Other mercaptan-containing compounds may also be present, for example alkyl mercaptans, mercapto alcohols, mercapto acids, and the like, having 1 to 400 carbon atoms and 1 to 4 mercapto groups.

Suitable mercaptoesters and reverse mercaptoesters may have 3 to 400 carbon atoms and 1 to 4 mercaptoester or reverse mercaptoester groups. Exemplary mercaptoesters and reverse mercaptoesters may have structures illustrated by the following formulas: 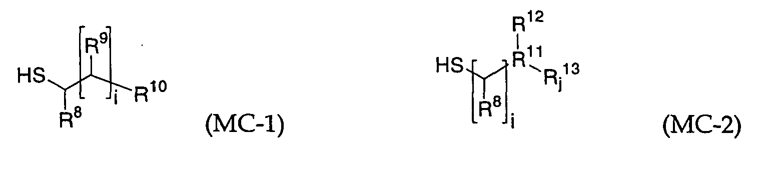 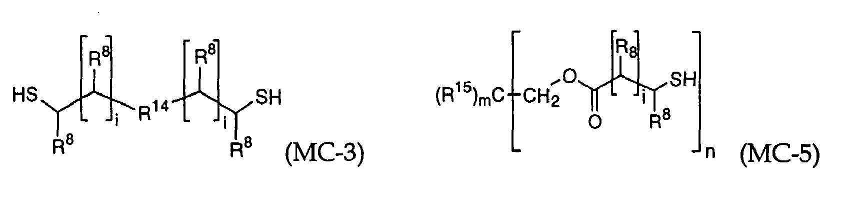 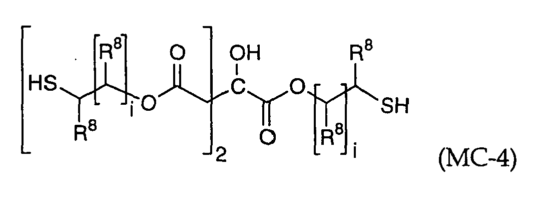 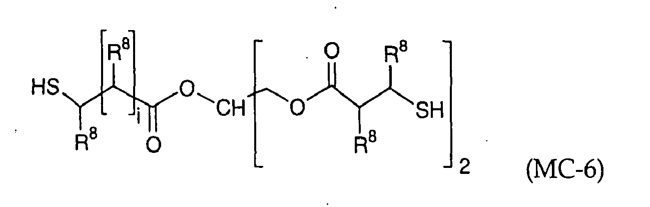 wherein
i=0-6; j=0-3; m=1-2; n=2-3, with the proviso that m + n=4;
R⁸ is -H, C₁₋₁₈ alkyl, or C₆₋₃₆ aryl;
R⁹ and R¹⁰ are each independently -H, -OH, -SH, C₁₋₁₈ alkyl, aryl, R¹⁶C(=O)O-, or R¹⁶OC(=O)-, with the proviso that at least one of R⁹ and R¹⁰ is a R¹⁶C(=O)O- or R¹⁶OC(=O)- group, but not both an R¹⁶C(=O)O- and an R¹⁶OC(=O)-group;
R¹¹ is cycloalkyl, cycloalkenyl or phenyl;
R¹² is a R¹⁶C(=O)O- or R¹⁶OC(=O)- group;
R¹³ is -H or a divalent group which may contain halogen, hydroxy, mercapto or alkyl substituents and which when R¹¹ is phenyl combines with the phenyl to form a naphthalene ring;
R¹⁴ is divalent, and is -OC(=O)R¹⁷C(=O)O-, -OC(=O)CH=CHC(=O)O-, or -C(=O)OR¹⁷OC(=O)-;
R¹⁵ is C₁₋₁₂ alkyl, preferably -CH₃, -CH₂CH₃; C₁₋₁₂ hydroxyalkyl, preferably hydroxymethyl; or 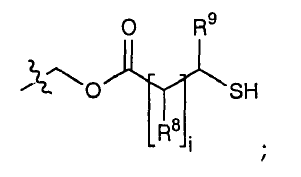
R¹⁶ is -H, C₁₋₂₄ alkyl, C₁₋₂₄ alkenyl, C₆₋₃₆ aryl, C₇₋₃₆ aralkyl, C₇₋₃₆ alkaryl, C₁₋₁₆ cycloalkyl, or C₁₋₃₆ cycloalkenyl; and
R¹⁷ is C₆₋₃₆ arylene, C₁₋₈ alkylenyl, -(CH₂CH₂O)_{b}CH₂CH₂- where b=1-6, or 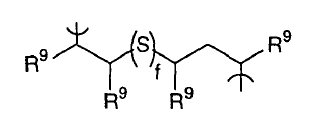 where f=1 or 2.

In one embodiment, the mercaptoesters and reverse mercaptoesters are compounds according to formula MC1 where R⁸ is -H; R⁹ is -H; R¹⁰ is R¹⁶C(=O)O- or R¹⁶OC(=O)-; and i=1; compounds according to formula MC2 where R¹¹ is phenyl; R⁸ is -H; R¹² is R¹⁶C(=O)O- or R¹⁶OC(=O)-; R¹³ is -H; j=1, and i=1; compounds according to formula MC3 where R⁸ is -H; R¹⁴ is -OC(=O)CH=CHC(=O)O-; and i=1; compounds according to formula MC4 where R⁹ is -H; and i=1; and compounds according to formula MC5 where R¹⁵ is -C₂H₅ or 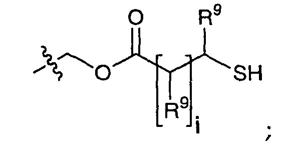 and R⁸ is -H; and i=1; and compounds according to formula MC6 where R⁸ is -H; and i=1.

Mercaptoesters and reverse mercaptoesters within the scope of formula MC1 include, for example, the compounds shown in Table 1:

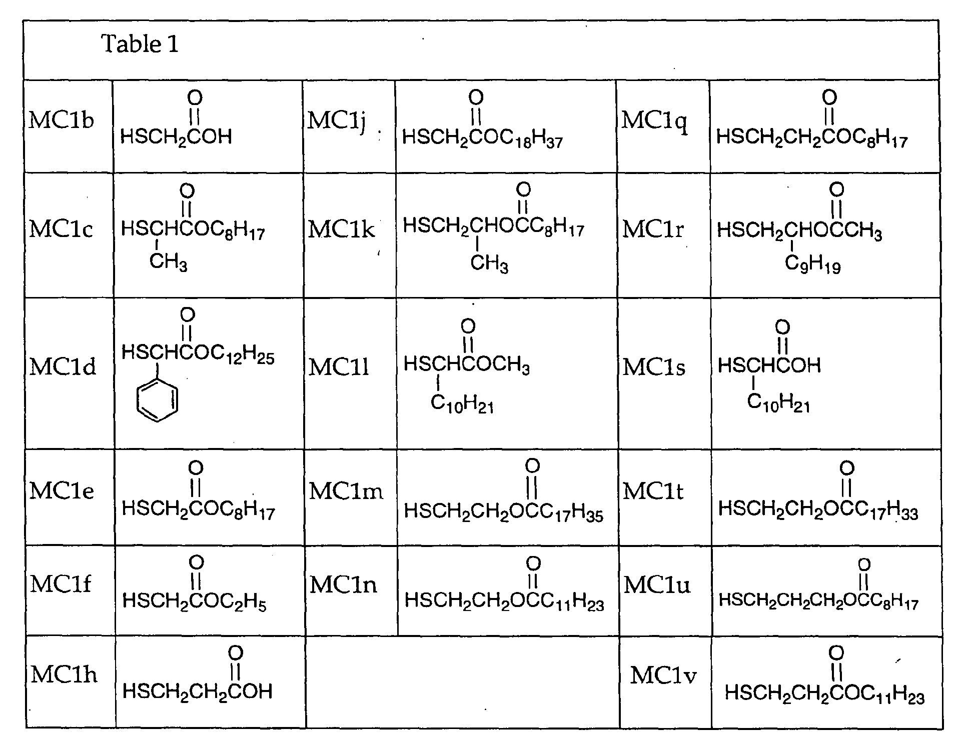

Mercaptoesters and reverse mercaptoesters within the scope of formula MC3 include, for example, the compounds shown in Table 2:

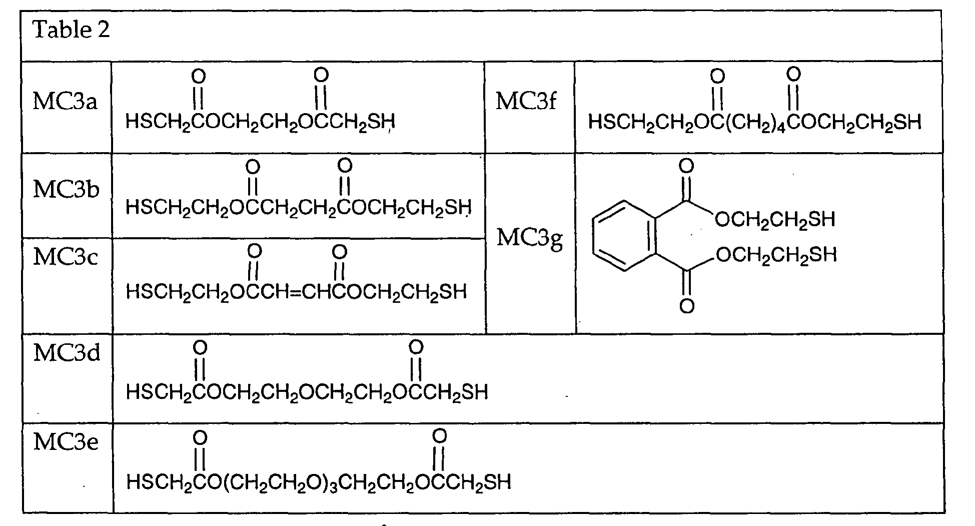

Reverse mercaptoesters within the scope of formula MC4 include, for example, the following compound:

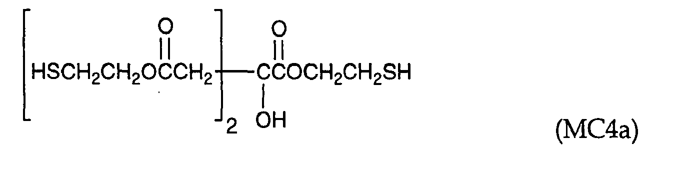

Mercaptoesters within the scope of formula MC5 include, for example, the following compounds:

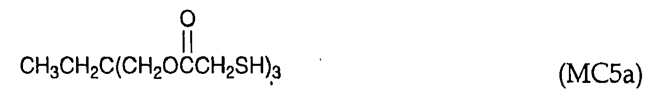

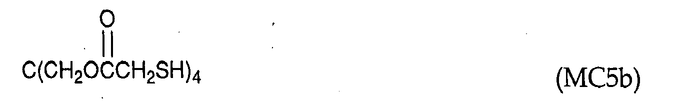

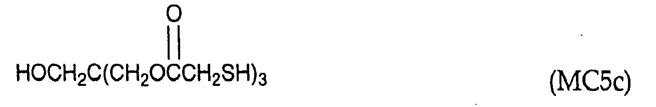

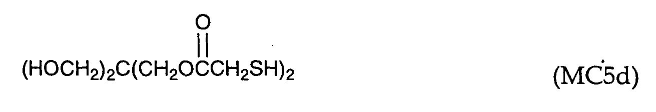

Mercaptoesters within the scope of formula MC6 include, for example, the following compounds:

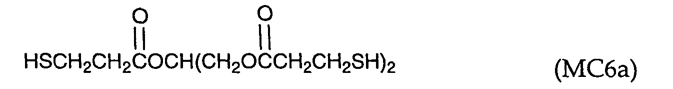

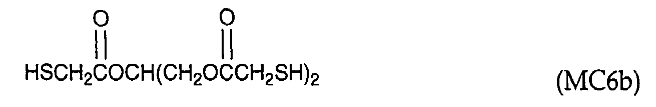

Suitable reverse esters include, for example, 2-mercaptoethyl stearate, 2-mercaptoethyl caproate, 2-mercaptoethyl tallate, 2-mercaptoethyl octanoate, and mixtures comprising one or more of the foregoing reverse mercaptoesters. Suitable mercaptoesters include, for example, stearyl thioglycolate, 2-ethylhexyl thioglycolate, diethylene glycol bis(thioglycolate), and mixtures comprising one or more of the foregoing mercaptoesters.

The amount of mercaptan-containing organic compound will vary depending on the application, and is readily determined by one of ordinary skill in the art, depending on the halogen-containing vinyl polymer formulation, processing method, intended use, and like considerations. In general, a suitable amount of mercaptan-containing organic compound, latent mercaptan, or mixture thereof is 0.1 phr to 5 phr, or 0.1 phr to 2 phr, based on the total weight of the stabilized polymeric composition.

Optionally, the stabilizer may include other co-stabilizers such as, for example, epoxy compounds, metallic stabilizers, phosphites, nitrogen-containing stabilizers, including hindered tertiary amines, other non-metallic stabilizers, polyols, zeolites, dawsonites, and mixtures comprising one or more of the foregoing co-stabilizers.

Suitable epoxy compounds include, for example, epoxidized oils such as soybean oil, lard oil, olive oil, linseed oil, peanut oil, castor oil, corn oil, tung oil, cottonseed oil, and mixtures comprising one or more of the foregoing epoxy compounds. Other suitable epoxy compounds include, for example, epichlorhydrin/bis-phenol A resins, butoxypropylene oxide, glycidyl epoxystearate, epoxidized α-olefins, epoxidized glycidyl soyate, epoxidized butyl toluate, glycidol, vinyl cyclo-hexene dioxide; the glycidyl ethers of resorcinol, hydroquinone, 1,5-dihydroxynaphthalene, glycerine, pentaerythritol, and sorbitol; allyl glycidyl ether, butyl glycidyl ether, cyclohexane oxide, 4-(2,3-epoxyproproxy)acetophenone, mesityl oxide epoxide, 2-ethyl-3-propyl glycidamine, and mixtures comprising one or more of the foregoing epoxy compounds. The epoxy may be present in amounts of up to 30 phr.

Suitable phosphites include, for example, trialkylphosphites such as trioctyl phosphite, tridecyl phosphite, tridodecyl phosphite, tri(tetradecyl) phosphite, tricyclohexyl phosphite, tristearyl phosphite, distearyl-pentaerythritol diphosphite, or trioleyl phosphite; triaryl phosphites such as triphenyl phosphite, tricresyl phosphite, or tris-p-nonylphenyl phosphite; alkyldiaryl phosphites such as phenyldidecyl phosphite or (2,4-di-tert-butylphenyl)didodecyl phosphite; dialkylaryl phosphites; thiophosphites such as trithiohexyl phosphite, trithiooctyl phosphite, trithiolauryl phosphite, or trithiobenzyl phosphite; or mixtures comprising any one or more of the foregoing phosphites. The phosphites can be used in an amount of, for example, 0.01 phr to 10 phr, or 0.05 phr to 5 phr, or 0.1 phr to 3 phr.

Metallic stabilizers are metal salts and organometallic salts other than zinc salts, and include, for example, barium, strontium, calcium, tin, magnesium, cobalt, nickel, titanium, antimony, or aluminum oxides, hydroxides, sulfides, sulfates, halides, phosphates, phenates, perchlorates, carboxylates, and carbonates of metals. Preferred metallic stabilizers include calcium hydroxide, magnesium hydroxide, calcium stearate, calcium 2-ethylhexanoate, calcium octanoate, calcium recinoaleate, calcium myristate, calcium palmitate, barium laurate, barium di(nonylphenolate), barium stearate, aluminum stearate, hydrotalcite, and mixtures comprising one or more of the foregoing metal salts. Metallic-based stabilizers can be present in an amount of up to 2 wt%, or 0.1 to 1 wt%, based on the total weight of the halogen-containing polymer.

Preferred organometallic stabilizers include organotin carboxylates and mercaptides. Suitable organometallic stabilizers include, for example, butyltin tris dodecyl mercaptide, dibutytin dilaurate, dibutyltin didodecyl mercaptide, dianhydride tris dibutylstannane diol, dihydrocarbontin salts of carboxy mercaptals, and mixtures comprising one or more of the foregoing organometallic stabilizers. Monosulfides and/or polysulfides of the organotin mercaptides of mercaptoalkyl carboxylates and/or alkyl thioglycolates; and mixtures comprising one or more of the foregoing, are also suitable as organometallic stabilizers.

Suitable nitrogen-containing stabilizers, include, for example, dicyandiamide, hindered amines, melamine, urea, dimethyl hydantoin, guanidine, thiourea, 2-phenylindoles, aminocrontonates, N-alkyl and N-phenyl substituted maleimides, 1,3-dialkyl-6-amino-uracil derivatives, pyrrolodiazine diones, and mixtures comprising one or more of the foregoing nitrogen-based stabilizers. The nitrogen-based stabilizers can be present in an amount of up to 10 phr. Useful sterically hindered amines include, for example, monomeric, oligomeric, or polymeric 2,2,6,6-tetramethylpiperidine compounds. The nitrogen of the piperidine moiety may be substituted by, for example, hydrogen, C₁₋₁₂ alkyl, C₃₋₈ alkenyl, or C₇₋₁₂ aralkyl. The C-4 carbon of the piperidine moiety may be substituted by, for example, hydrogen or oxygen or nitrogen-containing groups. Suitable 2,2,6,6-tetramethylpiperidine compounds include, for example, 4-hydroxy-2,2,6,6-tetramethylpiperidine, 1-benzyl-4-hydroxy-2,2,6,6-tetramethylpiperidine, 4-stearoyloxy-2,2,6,6-tetramethylpiperidine, 1,2,2,6,6-pentamethylpiperidin-4-yl-beta-(3,5-di-tert-butyl-4-hydroxyphenyl) propionate, di(2,2,6,6-tetramethylpiperidin-4-yl) succinate, 1-acetyl-2,2,6,6-tetramethylpiperidin-4-yl acetate, trimellitic acid tri(2,2,6,6-tetramethylpiperidin-4-yl) ester, and the like. The piperidines can be used in an amount of, for example, 0.01 to 1 phr.

Other suitable nonmetallic stabilizers include, for example, dilaurylthiodipropionate, distearyl 3,3'-thiopropionate, dibenzyl-3,3'-thiodipropionate, dicyclohexyl-3,3'-thiodipropionate, dioleyl-3,3'-thiodipropionate, didecyl-3,3'-thiodipropionate, diethyl-3,3'-thiodipropionate, lauryl ester of 3-mercaptopropionic acid, lauryl ester of 3-lauryl mercaptopropionic acid, the phenyl ester of 3-octyl mercaptopropionic acid, and mixtures comprising one or more of the foregoing non-metallic stabilizers. The latter non-metallic stabilizers may be present in an amount of up to 0.75 phr, or 0.01 phr to 0.75 phr.

Suitable polyols include, for example, diethylene glycol, glycerin, polyvinyl alcohol, pentaerythritol, dipentaerythritol, tripentaerythritol, bistrimethylolpropane, trimethylolpropane, inosite, polyvinyl alcohol, sorbitol, mannitol, lactose, tetramethylolcyclohexanol, tetramethylolcyclopyranol, glycerol, diglycerol, polyglycerol, 1,3,5-tris(2-hydroxyethyl)isocyanurate (THEIC), or mixtures comprising at least one of the foregoing. Preferred polyols include, for example, sorbitol and trimethylolpropane. The polyols can be used in an amount of, for example, 0.01 phr to 20 phr, or 0.1 phr to 10 phr.

As used herein, the term halogen-containing vinyl polymer means a halogen-containing polymer in which the halogens are attached directly to a carbon atom. The halogen-containing polymers include, for example, chlorinated polyethylene having 14 to 75%, e.g. 27%, chlorine by weight, chlorinated natural and synthetic rubber, rubber hydrochloride, chlorinated polystyrene, chlorinated poly(vinylidine chloride), chlorinated poly(vinyl chloride), poly(vinyl bromide), poly(vinyl fluoride), other vinyl chloride polymers, and mixtures comprising one or more of the foregoing polymers. The vinyl chloride polymers known as polyvinyl chloride (PVC) are made from vinyl chloride monomers alone or a mixture of monomer reactants comprising, preferably, at least 70% by weight of vinyl chloride, based on the total monomer weight. Suitable co-monomers include, for example, vinyl acetate, vinyl butyrate, vinyl benzoate, vinylidene chloride, trichloroethylene, 1-fluoro-2-chloroethylene, diethyl fumarate, diethyl maleate, methyl acrylate, 2-ethylhexyl acrylate, methyl alpha-chloroacrylate, butyl acrylate, methyl methacrylate, ethyl methacrylate, butyl methacrylate, styrene, vinyl ketones such as vinyl methyl ketone and vinyl phenyl ketone, acrylonitrile, chloroacrylonitrile, allylidene diacetate, chloroallylidene diacetate, and vinyl ethers such as vinyl ethyl ether, vinyl phenyl ether, the vinyl ether prepared by the reaction of one mole of acrolein with one mole of ethylene glycol divinyl ether, and mixtures comprising one or more of the foregoing co-monomers. Suitable halogen-containing vinyl copolymers include, for example, vinyl chloride-vinyl acetate (87:13), vinyl chloride-vinyl acetate-maleic anhydride (86:13:1), vinyl chloride-vinylidene chloride (95:5); vinyl chloride-diethyl fumarate (95:5), vinyl chloride 2-ethylhexyl acrylate (80:20), and mixtures comprising one or more of the foregoing copolymers.

A rigid halogen-containing vinyl polymer composition is one that does not contain a plasticizer. A semi-rigid halogen-containing vinyl polymer composition contains 1 to 25 parts of a plasticizer per 100 parts by weight of the halogen-containing vinyl polymer. A flexible halogen-containing vinyl polymer composition contains 25 to 100 parts of a plasticizer per 100 parts by weight of the halogen-containing vinyl polymer. Suitable plasticizers include, for example, alkyl esters of polyacids in which there are 1 to 3 alkyl groups having 8 to 12 carbon atoms. Suitable alkyl groups of the alkyl ester include, for example, n-octyl, 2-ethylhexyl, decyl, dodecyl, and mixtures comprising one or more of the foregoing alkyl groups. Suitable polyacids for the alkyl ester include, for example, phthalic acid, trimellitic acid, benzoic acid, adipic acid, sebacic acid, glutaric acid, phosphates, and the like. Polymeric plasticizers are also suitable.

Optionally, the halogen-containing polymer compositions may include other conventional additives such as, for example, antioxidants, lubricants, fillers, pigments, impact modifiers, blowing agents, processing aids, dyes, ultraviolet light absorbing agents, densifying agents, biocides, and mixtures comprising one or more of the foregoing additives. Suitable amounts of the foregoing additives are readily determined by one of ordinary skill in the art depending on the desired final properties and end use of the compositions. In general, each additive is present in an amount of 0.01 to 10 phr, or 0.1 to 5 phr.

Suitable antioxidants include, for example, phenolic antioxidants such as 2,6-di-t-butyl-p-cresol, butylated hydroxyanisole, 4,4'-thiobis(6-t-butyl-m-cresol), 4,4'-cyclohexylidenediphenol, 2,5-di-t-amyl hydroquinone, 4,4'-butylidene bis(6-t-buytl-m-cresol), hydroquinone monobenzyl ether, 2,2'-methylene-bis(4-methyl-6-t-butyl phenol), p-amino phenol, 4,4'-thiobis(3-methyl-6-t-butyl phenol), bis [o-(1,1,3,3-tetramethyl butyl)phenol] sulfide, 4-dodecyoxy-2-hydroxybenzophenone, n-dodecyl ester of 3-hydroxy-4-(phenyl carbonyl)phenoxyacetic acid, t-butyl phenol, and mixtures comprising one or more of the foregoing antioxidants.

Suitable lubricants include, for example, paraffin waxes, salts of fatty acids, low molecular weight polyethylene (i.e., polyethylene wax), fatty acid amides (i.e., laurimide and stearamide), bis amides (i.e., decamethylene, bisamide), fatty acid esters (e.g., butyl stearate, glyceryl stearate, linseed oil, palm oil, decyloleate, corn oil, cottonseed oil, and the like), and mixtures comprising one or more of the foregoing lubricants. Suitable fillers include, for example, calcined clays, calcium carbonate, talcs, and mixtures comprising one or more of the foregoing fillers. Suitable pigments include, for example, titanium dioxide, carbon black, iron oxide, and mixtures comprising one or more of the foregoing pigments.

In general, the above-described thermal stabilizer compositions are provided as a one-part mixture formulated so as to provide one or more hydrotalcites; and one or more zinc mercaptides, a mixture of one or more mercaptan-containing organic compounds and one or more zinc carboxylates, or a mixture comprising one or more of the foregoing stabilizers. As other optional additives may also be present in the one-part mixture, the particular amount of each component may vary from 0.1 to 99.9% percent by weight, preferably 1.0 to 99.0% by weight based on the total weight of the one-part mixture. Particular amounts effective to result a synergistic improvement in thermal stability are readily determined by one of ordinary skill in the art.

The halogen-containing vinyl polymer compositions may be prepared by blending under low or high shear. Likewise, the thermal stabilizer compositions may be incorporated in the halogen-containing vinyl polymer composition by mixing the components thereof and the polymer in an appropriate mill or mixer or by another method that provides uniform distribution of the stabilizer throughout the polymer. Depending on the compatibility and physical state (i.e., liquid or solid) the components of the blend may require heating to form a uniform stabilized polymer composition having the desired performance characteristics.

The stabilized halogen-containing vinyl polymer composition can be used to form a variety of rigid articles such as, for example, house siding, window profiles, and pipe by using a variety of techniques to shape the articles such as, for example, molding, extrusion, and injection molding.

In one embodiment, a synergistic combination comprising a hydrotalcite and a zinc mercaptide can provide improved long-term color stability, preferably together with improved early color. In another embodiment, a synergistic combination comprising a hydrotalcite, a mercaptan-containing organic compound, and a zinc carboxylate can provide improved long-term color stability, preferably together with improved early color.

Stabilizer compositions comprising one or more hydrotalcites; and one or zinc mercaptides as described herein act synergistically to protecting halogen-containing vinyl polymers from degradation and discoloration during processing or long-term use. In another embodiment, stabilizer compositions comprising one or more hydrotalcites, one or more mercaptan-containing organic compounds, and one or more zinc carboxylates as described herein act synergistically to protecting halogen-containing vinyl polymers from degradation and discoloration during processing or long-term use. The invention is further illustrated by the following non-limiting

### examples.

### EXAMPLES

The invention is further illustrated by the following examples, wherein PVC compositions for thermal stability testing were prepared by mixing, under high shear, 100 parts by weight of PVC resin, pigment (0.2 phr), mold release agents (0.5-2.0 phr), co-stabilizer (1 to 10 phr epoxidized soybean oil), and lubricants (0.2 to 2.0 phr), together with the stabilizer compositions shown in the Tables. The mixed compositions were then heated in a two-roll mill at 390°F (199°C) and samples were removed at the indicated time intervals and formed into chips. Color change (as reflected by dE) and yellowness (YI) of each chip was measured using a Hunter Labs (L, a, b) colorimeter.

Examples 1- 4 show the synergistic effects obtained using a combination of a hydrotalcite and a zinc mercaptide.

**Table 1.**

| **Component** | **Example No.** | | | |
|---|---|---|---|---|
| | **1*** | **2** | **3** | **4** |
| 2-S-tetrahydropyranal-2-ethylhexylthioglycolate | 0.50 | - | - | - |
| Zinc chloride | 0.08 | - | - | - |
| Zinc bis(2-ethylhexyl thioglycolate) | - | 0.24 | 0.24 | 0.24 |
| Hydrotalcite, Alcamizer 4 | - | 0.10 | 0.20 | 0.30 |
| | | | | |

| | | | | |
|---|---|---|---|---|
| **dE at minute** | | | | |
| 1 | 19.9 | 18.7 | 17.9 | 17.4 |
| 2 | 21.2 | 19.2 | 19.1 | 18.8 |
| 3 | 24.8 | 20.5 | 19.9 | 20.1 |
| 4 | 33.3 | 23.3 | 21.6 | 22.8 |
| 5 | 42.1 | 32.9 | 30.3 | 28.8 |
| 6 | 45.9 | 38.1 | 41.8 | 40.6 |
| 7 | 50.6 | 43.8 | 46 | 47.3 |
| 8 | 54.5 | 47.3 | 46.9 | 48.5 |
| 9 | 58.4 | 48.6 | 48.9 | 50.6 |
| 10 | 59.7 | 49.9 | 49.2 | 50.2 |
| 11 | 61.2 | 56.6 | 53.3 | 52.6 |
| 12 | 60.6 | 66.3 | 56.2 | 53.1 |

| | | | | |
|---|---|---|---|---|
| *Control | | | | |

As shown in Table 1, the combination of a zinc mercaptan and a hydrotalcite shows improved color, particularly early color, when compared to the combination of a latent mercaptan and zinc chloride. In addition, the early color is improved by increasing the amount of hydrotalcite while keeping the amount of zinc mercaptide constant.

Examples 5-8 show the synergistic effects obtained using a combination of a hydrotalcite, a mercaptoester and a zinc carboxylate.

**Table 2.**

| **Component** | **Example No.** | | | |
|---|---|---|---|---|
| | **5*** | **6** | **7** | **8** |
| Latent mercaptan | 0.5 | - | - | - |
| Zinc chloride | 0.08 | - | - | - |
| 2-ethylhexylthioglycolate | - | 0.5 | 0.5 | 0.5 |
| Zinc octoate | - | 0.16 | 0.16 | 0.16 |
| Hydrotalcite, Alcamizer 4 | - | 0.10 | 0.20 | 0.30 |
| | | | | |
| **dE at minute** | | | | |
| 1 | 14.3 | 12.2 | 12.2 | 11.8 |
| 2 | 15.5 | 13.4 | 12.9 | 12.8 |
| 3 | 16.8 | 13.8 | 13.4 | 12.9 |
| 4 | 21.3 | 14.2 | 14.4 | 13.3 |
| 5 | 26.8 | 17 | 15.2 | 13.2 |
| 6 | 32.1 | 25.4 | 18.9 | 14.9 |
| 7 | 38 | 33.2 | 25.2 | 17.1 |
| 8 | 44.5 | 41.2 | 31.6 | 22.6 |
| 9 | 50.2 | 51.7 | 39.2 | 27.8 |
| 10 | 55.8 | 59.9 | 44.1 | 34.5 |
| 11 | | | 51 | 38.4 |
| 12 | | | 53.9 | 42.1 |

| | | | | |
|---|---|---|---|---|
| *Control | | | | |

As shown in Table 2, the combination of a mercaptoester, a zinc carboxylate, and a hydrotalcite shows improved color, particularly early color, when compared to the combination of a latent mercaptan and zinc chloride. In addition, the early color is improved by increasing the amount of hydrotalcite while keeping the amount of mercaptoester and zinc carboxylate constant.

All ranges disclosed herein are inclusive and combinable.

## Claims

1. A stabilized polymeric composition comprising a halogen-containing vinyl polymer and a stabilizer composition, the stabilizer composition comprising
a hydrotalcite; and
a zinc mercaptide, a mixture of a mercaptan-containing organic compound and a zinc carboxylate, or a mixture comprising one or more of the foregoing stabilizers, wherein
the zinc mercaptide is a zinc mercaptoester of Formula 2:
Zn[S(CH₂)_{b}C(=O)OR]₂ (2)
wherein each R is independently a hydrocarbyl group, and b is 1 or 2;
a zinc mercaptoester of Formula 3:
Zn[S(CHR')_{c}(CH₂)_{d}C(=O)OR"]₂ (3)
wherein c = 0 or 1, d = 1 or 2, each R' is independently methyl or -C(=O)OR", and each R" is independently -[(CH₂{C(R*)(R²*)}ₑCH₂O)_{f}R³*] where each R* is independently -H, C₁₋₁₈ alkyl or C₁₋₁₈ hydroxy-substituted alkyl, each R²* is -OH, C₁₋₁₈ hydroxy-substituted alkyl, or -OC(=O)R⁴*, each R³* is -H or C₁₋₁₈ alkyl, each R⁴* is alkyl or alkenyl, e = 0 or 1, and f = 1-4, with the proviso that when f is greater than 1, e=0; or
a zinc mercaptoalkyl carboxylic acid ester of Formula 4:
Zn[SCH₂(CH₂)_{g}OC(=O)R⁵*]₂, (4)
wherein R⁵* is a C₁₋₁₈ alkyl, C₁₋₁₈ alkenyl, or C₆₋₁₂ aryl group, and g = 1-6, or a mixture comprising one or more of the foregoing zinc mercaptides.

2. The stabilized polymeric composition of Claim 1, wherein the mercaptan-containing organic compound comprises a zinc mercaptoester of Formula 2:
Zn[S(CH₂)_{b}C(=O)OR]₂ (2)
wherein each R is independently a hydrocarbyl group, and b is 1 or 2;.

3. The stabilizer composition of Claim 1, wherein the zinc mercaptide is zinc bis(2-ethylhexyl thioglycolate), zinc bis(octyl mercaptopropionate), zinc bis(octadecyl thioglycolate), zinc bis(octadecyl mercaptopropionate), zinc bis(ethyl thioglycolate), inc bis(2-mercaptoethyl stearate), zinc (2-mercaptoethyl caproate), zinc bis(2-mercaptoethyl tallate), zinc bis(2-mercaptocaprylate), or a mixture comprising one or more of the foregoing zinc mercaptides.

4. The stabilizer composition of claim 1, further comprising a polyol.

5. The stabilized polymeric composition of Claim 1, wherein the composition comprises 0.05 to 5 parts by weight of the hydrotalcite, 0.1 to 5 parts by weight of the mercaptan-containing organic compound; and 0.01 to 0.2 parts by weight of zinc in the form of zinc carboxylate, all based on 100 parts of the halogen-containing vinyl polymer.

6. The stabilized polymeric composition of Claim 1, wherein the composition comprises 0.05 to 5 parts by weight of the hydrotalcite, and 0.01 to 0.2 parts by weight of zinc in the form of zinc mercaptide, all based on 100 parts of the halogen-containing vinyl polymer.

7. A stabilizer composition comprising
a hydrotalcite; and
a zinc mercaptide, a mixture of a mercaptan-containing organic compound and a zinc carboxylate, or a mixture comprising one or more of the foregoing stabilizers, wherein
the zinc mercaptide is a zinc mercaptoester of Formula 2:
Zn[S(CH₂)_{b}C(=O)OR]₂ (2)
wherein each R is independently a hydrocarbyl group, and b is 1 or 2;
a zinc mercaptoester of Formula 3:
Zn[S(CHR')_{c}(CH₂)_{d}C(=O)OR"]₂ (3)
wherein c = 0 or 1, d = 1 or 2, each R' is independently methyl or -C(=O)OR", and each R" is independently -[(CH₂{C(R*)(R²*)}ₑCH_{f}O)_{z}R³*] where each R* is independently -H, C₁₋₁₈ alkyl or C₁₋₁₈ hydroxy-substituted alkyl, each R²* is -OH, C₁₋₁₈ hydroxy-substituted alkyl, or -OC(=O)R⁴*, each R³* is -H or C₁₋₁₈ alkyl, each R⁴* is alkyl or alkenyl, e = 0 or 1, and f = 1-4, with the proviso that when f is greater than 1, e=0; or
a zinc mercaptoalkyl carboxylic acid ester of Formula 4:
Zn[SCH₂(CH₂)_{g}OC(=O)R⁵*]₂, (4)
wherein R⁵* is a C₁₋₁₈ alkyl, C₁₋₁₈ alkenyl, or C₆₋₁₂ aryl group, and g = 1-6,
or a mixture comprising one or more of the foregoing zinc mercaptides.

8. A method of stabilizing a halogen-containing vinyl polymer comprising adding to the halogen-containing vinyl polymer the stabilizer composition of Claim 7.

9. An article comprising the composition and/or degradation products of the composition of Claim 7.

10. The article of Claim 9, wherein the article is a pipe, a window casing, siding, a bottle, wall covering or packaging film.
